# DEMANDE DE BREVET EUROPEEN

(11) **EP 1 736 084 A1**
(43) Date de publication de la demande: **27.12.2006**
(21) Numéro de dépôt: 06356069.2
(22) Date de dépôt: 16.06.2006
(51) Int. Cl.: A47J 37/12, A47J 27/00, A47J 27/10, A47J 36/18, A47J 36/20

(54) **Cuiseur à panier de cuisson, comportant un système de remuage des aliments**

(30) Priorité: 22.06.2005 FR 0506332
(71) Demandeur: SEB SA, 69130 Ecully (FR)
(72) Inventeur: Pellerin, Olivier, 21510 Minot (FR); Payen, Jean-Marc, 21800 Quetigny (FR); Sobole, Céline, 21490 Clenay (FR)
(74) Mandataire: Kiehl, Hubert

(57) **Abrégé**

- L'invention concerne un cuiseur, notamment un cuiseur à pâtes, comportant une cuve prévue pour recevoir un bain de cuisson susceptible d'être porté à ébullition, un panier de cuisson (3) agencé dans la cuve, le panier de cuisson (3) présentant un fond ajouré (30), le panier de cuisson (3) délimitant avec la cuve une chambre d'ébullition sous le fond ajouré (30), le fond ajouré (30) présentant une zone périphérique (35) pourvue d'ouvertures (34).
- Conformément à l'invention, la zone périphérique (35) entoure une zone intermédiaire (36) moins dense en ouvertures.

## Description

La présente invention concerne le domaine technique des cuiseurs comprenant un panier de cuisson agencé dans une cuve contenant un bain de cuisson susceptible d'être porté à ébullition.

La présente invention concerne notamment les cuiseurs à pâtes. La présente invention concerne les ustensiles de cuisson placés sur une source de chauffe ainsi que les appareils de cuisson électrique comportant une source de chauffe.

Lors d'une cuisson dans un bain de cuisson, certains types d'aliments, tels que les pâtes, sont susceptibles de coller aux parois du réceptacle de cuisson. Notamment, lorsque le réceptacle de cuisson est un panier de cuisson ajouré placé dans une cuve contenant le bain de cuisson, l'agitation des aliments provoquée par l'ébullition du bain de cuisson est moindre que dans la cuve et le risque de collage des aliments aux parois du réceptacle de cuisson est augmenté.

Il est connu du document WO 2004/002280 un cuiseur à pâtes comportant un panier de cuisson agencé dans une cuve. Le panier de cuisson est associé à un dispositif de monte et baisse. Une pale entraînée en rotation est montée sur le fond du panier de cuisson. Cette construction permet de remuer les pâtes et d'éviter leur collage aux parois du panier de cuisson. Toutefois, une telle construction est peu économique à réaliser. Le montage/démontage et le nettoyage ne sont pas aisés.

Un but de la présente invention est de proposer un cuiseur comportant un panier de cuisson agencé dans une cuve, dans lequel le risque de collage des aliments aux parois du panier de cuisson est limité.

Un but de la présente invention est de proposer un cuiseur comportant un panier de cuisson agencé dans une cuve, dans lequel le risque de collage des aliments entre eux est limité.

Un autre but de la présente invention est de proposer un cuiseur du type précité, dont la construction soit simple.

Un autre but de la présente invention est de proposer un cuiseur du type précité, dont la construction soit compacte.

Un autre but de la présente invention est de proposer un cuiseur du type précité, dont l'utilisation soit simple.

Un autre but de la présente invention est de proposer un cuiseur du type précité, dont l'utilisation soit économique.

Un autre but de la présente invention est de proposer un cuiseur du type précité, dont le nettoyage du panier de cuisson soit aisé.

Un autre but de la présente invention est de proposer un cuiseur du type précité, dont le nettoyage de la cuve soit aisé.

Un autre but de la présente invention est de proposer un cuiseur du type précité permettant une cuisson sans surveillance.

Ces buts sont atteints avec un cuiseur, notamment un cuiseur à pâtes, comportant une cuve prévue pour recevoir un bain de cuisson susceptible d'être porté à ébullition, un panier de cuisson agencé dans la cuve, le panier de cuisson présentant un fond ajouré, le panier de cuisson délimitant avec la cuve une chambre d'ébullition sous le fond ajouré, le fond ajouré présentant une zone périphérique pourvue d'ouvertures, du fait que la zone périphérique entoure une zone intermédiaire moins dense en ouvertures. Cette disposition permet de forcer la vapeur à passer préférentiellement par le fond ajouré pour s'échapper. Cette disposition contribue à favoriser l'agitation du bain de cuisson dans le panier de cuisson. Les risques de collage des aliments contre les parois du bain de cuisson ou entre eux sont ainsi diminués. Cette disposition permet de favoriser l'échappement des bulles de vapeur le long de la paroi latérale du panier de cuisson, permettant ainsi de contrarier le collage des aliments sur ladite paroi latérale. La construction d'un tel cuiseur reste simple. L'utilisateur n'a pas besoin de remuer les aliments, la cuisson peut être effectuée sans surveillance. Du fait de l'absence de pale entraînée en rotation dans le panier de cuisson, l'utilisation de l'appareil et le nettoyage de la cuve et du panier de cuisson sont facilités. Le remuage obtenu permet de réduire la quantité d'eau nécessaire à la cuisson, ce qui permet de diminuer la hauteur de la cuve ainsi que la quantité d'énergie nécessaire à la cuisson.

Avantageusement, le cuiseur comporte un dispositif de maintien prévu pour bloquer le panier de cuisson dans la cuve lors de la cuisson. Cette disposition permet d'éviter que l'ébullition ne soulève le panier de cuisson lors de la cuisson, l'efficacité du remuage des aliments étant fortement limitée si la vapeur peut passer ailleurs que par le fond ajouré.

Selon une construction avantageuse, le dispositif de maintien est formé par un dispositif de monte et baisse du panier de cuisson.

Avantageusement, le panier de cuisson comporte une paroi périphérique entourant le fond ajouré. Cette disposition permet de simplifier la construction de la cuve.

Avantageusement alors, la paroi périphérique porte un joint prévu pour prendre appui contre la cuve. Cette disposition permet de limiter les fuites de vapeur de la chambre d'ébullition. En alternative la paroi périphérique peut reposer sur la cuve. De préférence alors la paroi périphérique repose sur le fond de la cuve. Le fond de la cuve peut ainsi être dépourvu de conformation prévue spécifiquement pour la réception du panier de cuisson.

Avantageusement alors, la zone intermédiaire est dépourvue d'ouvertures. Avantageusement alors la zone intermédiaire est relevée en direction de la zone périphérique. Ces dispositions contribuent à diriger la vapeur vers la zone périphérique.

Avantageusement encore le fond ajouré présente une zone centrale pourvue d'ouvertures. Cette disposition permet d'agiter également la partie centrale du bain de cuisson dans le panier de cuisson.

Avantageusement encore le fond ajouré est bombé vers le bas. Cette disposition contribue à diriger les bulles de vapeur vers la périphérie.

Avantageusement encore le panier de cuisson comporte une paroi latérale perforée, pour faciliter l'égouttage des aliments et diminuer les risques de moussage et de débordement.

Selon une forme de réalisation avantageuse, la cuve est montée dans un boîtier.

Avantageusement encore la cuve est montée amovible dans le boîtier. Cette disposition permet notamment de faciliter le nettoyage de la cuve.

Selon une forme de réalisation avantageuse la cuve est associée à des moyens de chauffe. Par exemple les moyens de chauffe peuvent être solidaires de la cuve ou encore être montés dans le boîtier. En alternative la cuve peut être dépourvue de moyens de chauffe et être prévue pour être placée sur une source chauffante.

L'invention sera mieux comprise à l'étude d'un exemple de réalisation, pris à titre nullement limitatif, illustré dans les figures annexées, dans lesquelles :
- la figure 1 est une vue schématique en éclaté d'un exemple de réalisation d'un cuiseur selon l'invention,
- la figure 2 est une vue de côté en coupe du cuiseur illustré à la figure 1,
- la figure 3 est une vue en perspective du boîtier et de la cuve du cuiseur illustré aux figures 1 et 2, le panier de cuisson, le couvercle et l'accessoire à sauces ayant été retirés,
- la figure 4 est une vue en perspective de dessus du panier de cuisson visible aux figures 1 et 2,
- la figure 5 est une vue en perspective de dessous du panier de cuisson visible aux figures 1 et 2,
- la figure 6 est une vue en perspective et en coupe du cuiseur illustré aux figures 1 et 2, le panier de cuisson étant en position relevée,
- la figure 7 est une vue en perspective et en coupe du cuiseur illustré aux figures .1, 2 et 6, le panier de cuisson étant en position abaissée,
- la figure 8 est une vue d'une partie du dispositif de détection de vapeur.

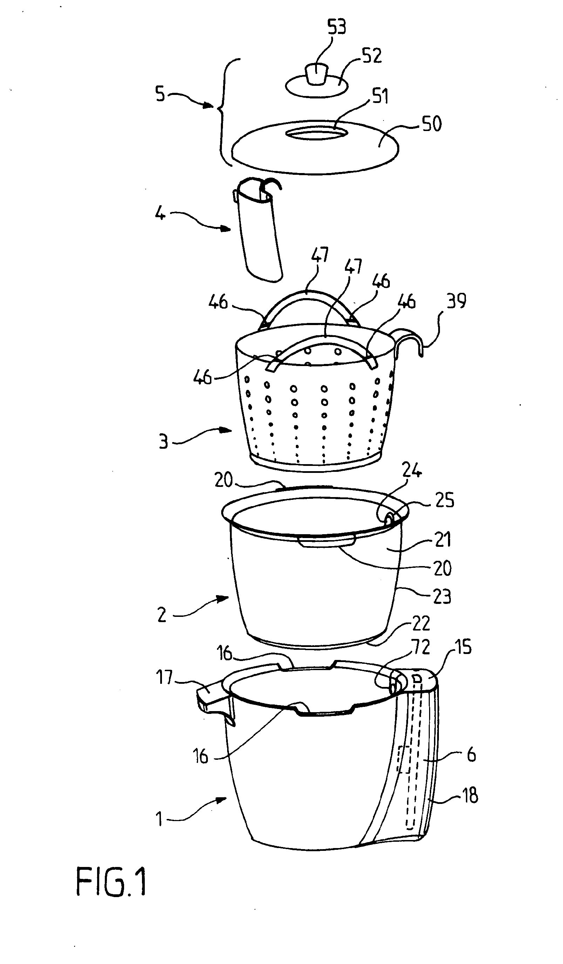

L'appareil illustré aux figures 1 à 8 est un cuiseur, notamment un cuiseur à pâtes, comportant un boîtier 1, une cuve 2, un panier de cuisson 3, un accessoire à sauces 4, et un couvercle 5.

Tel que visible sur la figure 1, le boîtier 1 forme un logement 10 prévu pour recevoir la cuve 2. Le bord supérieur du logement 10 présente des échancrures 16 prévues pour recevoir des poignées 20 de la cuve 2.

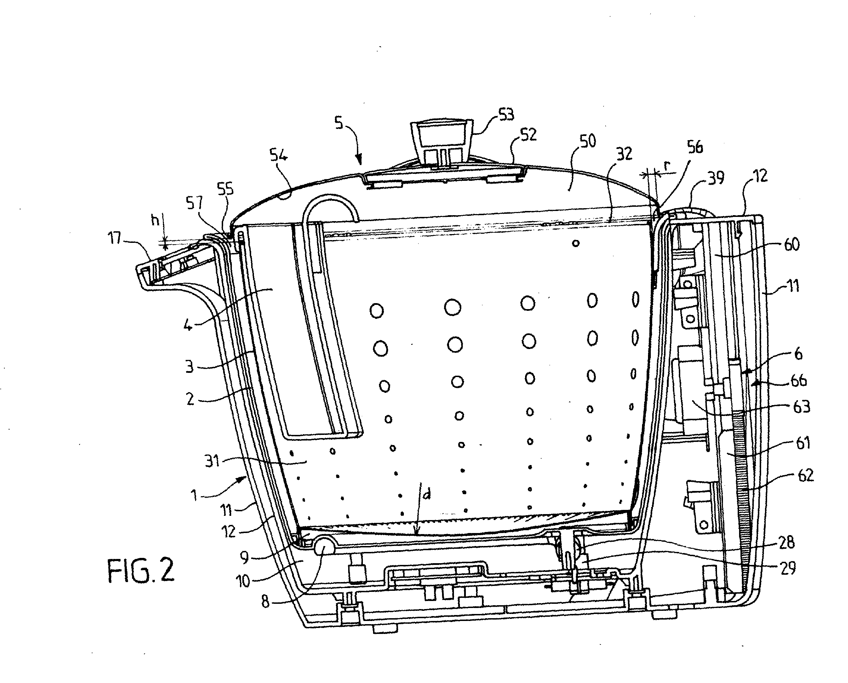

Le boîtier 1 présente une protubérance latérale supérieure 17 logeant une partie des organes de commande du cuiseur. La protubérance latérale supérieure 17 s'étend à partir du bord supérieur du boîtier 1. La protubérance latérale 17 forme également un organe de préhension. Le boîtier 1 présente une protubérance latérale 18 logeant un dispositif de monte et baisse 6 du panier de cuisson 3. La protubérance latérale 18 s'étend sur toute la hauteur du boîtier 1. Tel que visible sur la figure 2, le boîtier 1 comporte une coque inférieure extérieure 11 et une coque supérieure intérieure 12.

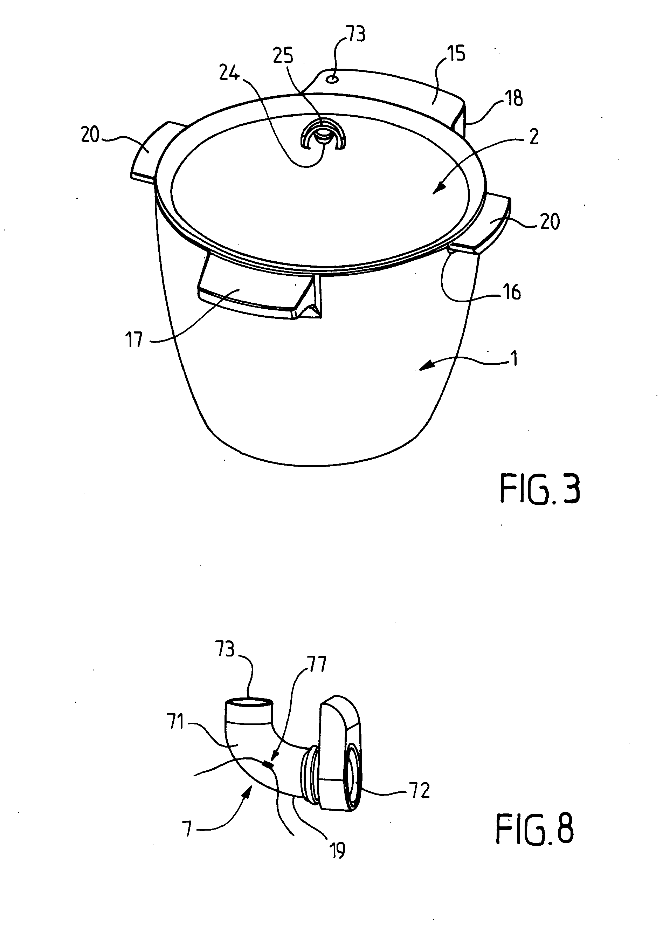

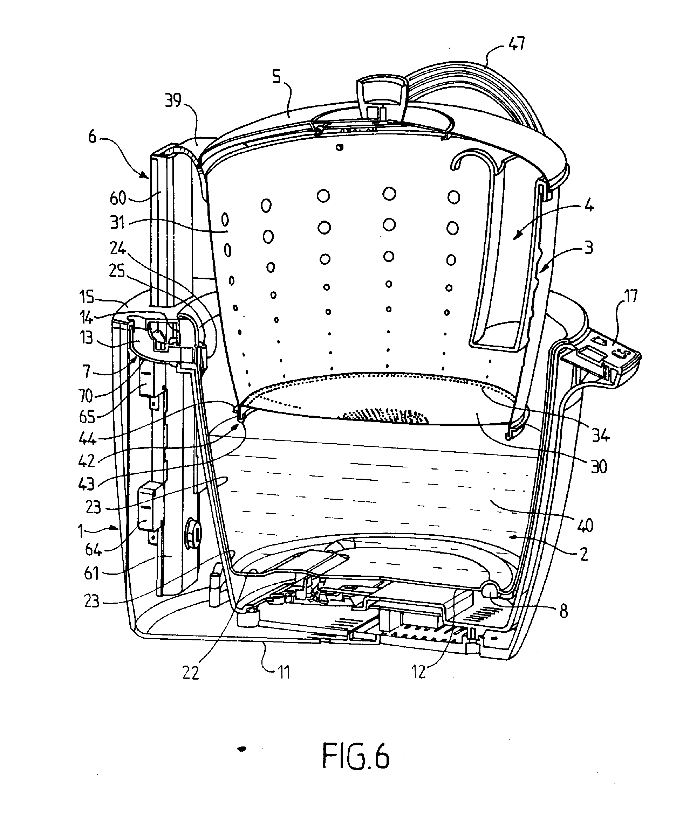

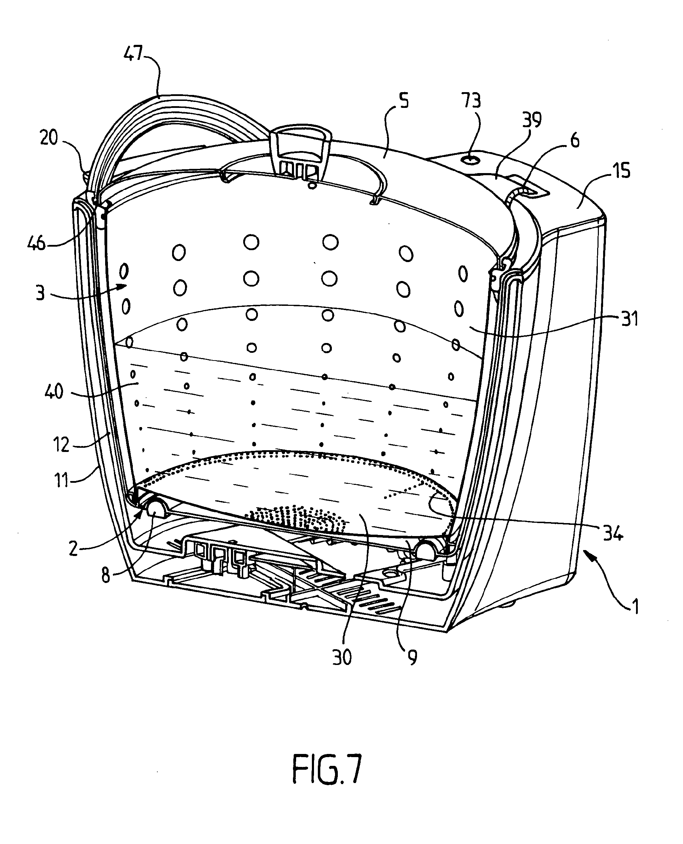

La cuve 2 comporte des poignées 20. La cuve comporte un corps 21 présentant un fond 22 et une paroi latérale 23. Le corps 21 de la cuve 2 est par exemple réalisé en aluminium revêtu. Les poignées 20 sont montées sur le corps 21. Tel que montré à la figure 3, la cuve 2 est montée dans le boîtier 1. Plus particulièrement, la cuve 2 est montée amovible dans le boîtier 1. La cuve 2 est associée à des moyens de chauffe 8. Tel que montré à la figure 2, les moyens de chauffe 8 sont agencés sous la cuve 2. La cuve 2 est prévue pour recevoir un bain de cuisson 40 visible sur les figures 6 et 7. Le bain de cuisson 40 placé dans la cuve 2 est susceptible d'être porté à ébullition par les moyens de chauffe 8.

Le panier de cuisson 3 est agencé dans la cuve 2. Le panier de cuisson 3 est associé au dispositif de monte et baisse 6. Le panier de cuisson 3 est monté mobile entre une position relevée, illustrée à la figure 6, et une position abaissée, illustrée aux figures 2 et 7. Le panier de cuisson 3 est par exemple réalisé en acier inoxydable.

Le panier de cuisson 3 présente un bord périphérique supérieur 32 agencé à l'intérieur de la cuve 2 lorsque le panier de cuisson 3 est en position abaissée dans la cuve 2, tel que montré à la figure 2. Le panier de cuisson 3 en position relevée est agencé partiellement à l'intérieur de la cuve 2, tel que montré à la figure 6.

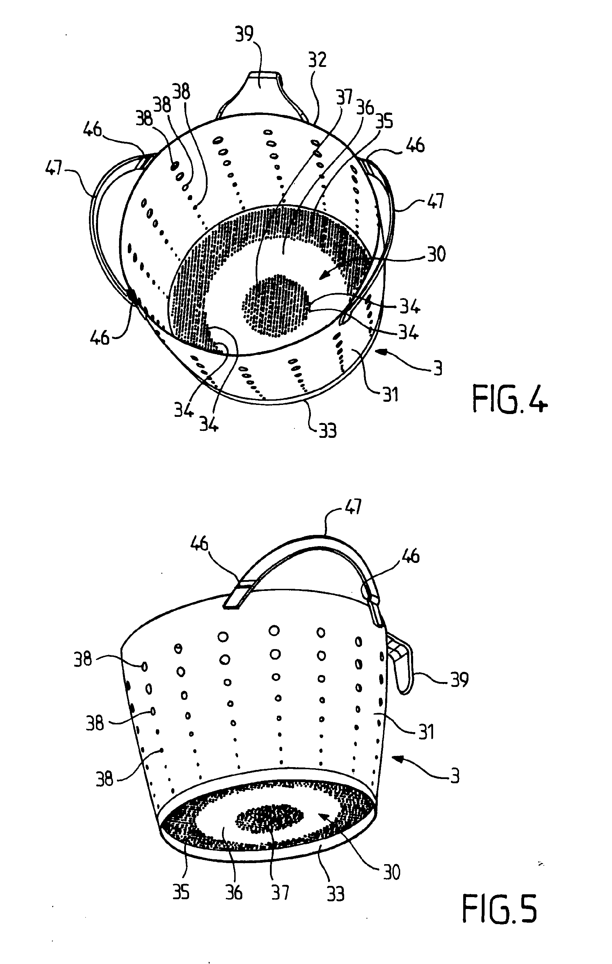

Tel que mieux visible aux figures 4 et 5, le panier de cuisson 3 présente un fond ajouré 30. Le panier de cuisson 3 comporte une paroi latérale perforée 31. La paroi latérale perforée 31 présente des ouvertures latérales 38. La taille des ouvertures latérales 38 augmente du bas vers le haut du panier de cuisson 3. Le panier de cuisson 3 comporte un organe d'accrochage 39 prévu pour coopérer avec le dispositif de monte et baisse 6.

Plus particulièrement, le fond ajouré 30 comporte des ouvertures 34. Seule une partie des ouvertures 34 a été représentée sur les figures 2, 6 et 7. La largeur des ouvertures 34 est de préférence comprise entre 1 et 2 mm, pour assurer un passage de vapeur suffisant, tout en empêchant le passage de pâtes telles que les spaghetti. Le fond ajouré 30 présente une zone périphérique 35 pourvue d'ouvertures 34. La zone périphérique 35 n'est toutefois pas nécessairement immédiatement adjacente à la paroi latérale perforée 31. La zone périphérique 35 comporte par exemple une densité d'ouvertures 34 comprise entre 15 et 20%. La zone périphérique 35 entoure une zone intermédiaire 36 moins dense en ouvertures. Plus particulièrement la zone intermédiaire 36 est dépourvue d'ouvertures. La zone intermédiaire 36 est relevée en direction de la zone périphérique 35. Le fond ajouré 30 présente une zone centrale 37 pourvue d'ouvertures 34. La zone centrale 37 comporte par exemple aussi une densité d'ouvertures 34 comprise entre 15 et 20%. La zone périphérique 35, la zone intermédiaire 36 et la zone centrale 37 sont représentées schématiquement sur les figures 4 et 5.

Tel que mieux visible sur la figure 2, le fond ajouré 30 est bombé vers le bas.

Le fond ajouré 30 présente par exemple un rayon d de l'ordre de 80 cm. Le panier de cuisson 3 comporte une paroi périphérique 33 entourant le fond ajouré 30. Le panier de cuisson 3 en position abaissée dans la cuve 2 délimite avec la cuve 2 une chambre d'ébullition 9 sous le fond ajouré 30. Le panier de cuisson 3 repose sur la cuve 2. Plus particulièrement, le panier de cuisson 3 repose sur le fond 22 de la cuve 2. La paroi périphérique 33 porte un joint 42 prévu pour prendre appui contre la cuve 2. Le joint 42 présente une section en U enserrant la paroi périphérique 33. Le joint 42 présente une base 43 prévue pour reposer sur le fond 22 de la cuve 2. Le joint 42 présente une lèvre externe 44 prévue pour prendre appui contre la paroi latérale 23 de la cuve 2. Le joint 42 permet de limiter les fuites de vapeur entre la cuve 2 et le panier de cuisson 3. Le joint 42 permet aussi d'éviter de rayer la cuve 2 avec le panier de cuisson 3.

Les moyens de chauffe 8 sont agencés en dessous de la chambre d'ébullition 9. La puissance des moyens de chauffe 8 est par exemple de l'ordre de 2000 W. Plus particulièrement, les moyens de chauffe 8 sont agencés en dessous de la zone périphérique 35. Les moyens de chauffe 8 sont formés par un élément chauffant blindé 28 rapporté sous le fond de la cuve 2. Les moyens de chauffe 8 coopèrent avec un connecteur 29 agencé dans le boîtier 1.

L'accessoire à sauces 4 est accroché sur le bord périphérique supérieur 32 du panier de cuisson 3, pour permettre le réchauffage voire la cuisson de sauces lors de la cuisson des aliments placés dans le panier de cuisson 3. L'accessoire à sauces 4 peut notamment être réalisé en matière plastique.

Le couvercle 5 comporte un corps principal 50 présentant une ouverture supérieure 51 et un corps secondaire 52 muni d'un organe de préhension 53, tel que mieux visible sur la figure 1. Le corps secondaire 52 est amovible et est prévu pour fermer l'ouverture supérieure 51. Le corps principal 50 et le corps secondaire 52 sont par exemple réalisés en acier inoxydable.

Le couvercle 5 est agencé sur le panier de cuisson 3. Le couvercle 5 couvre le panier de cuisson 3. Le couvercle 5 s'étend à distance du bord périphérique supérieur 32 du panier de cuisson 3. Plus particulièrement, le couvercle 5 repose sur des supports 46 issus du panier de cuisson 3. Les supports 46 forment des moyens de préhension 47.

Le couvercle 5 présente une paroi inférieure 54 ayant une partie périphérique inclinée vers le bas en direction de la périphérie. Le couvercle 5 comporte un bord périphérique inférieur 55 s'étendant à l'extérieur du panier de cuisson 3. Le bord périphérique inférieur 55 est disposé à une distance h au dessus du bord périphérique supérieur 32 du panier de cuisson 3. La distance h est par exemple comprise entre 1 et 2 mm. Le bord périphérique inférieur 55 est disposé à une distance r à l'extérieur du bord périphérique supérieur 32 du panier de cuisson 3. La distance r est par exemple comprise entre 2 et 5 mm. Le bord périphérique inférieur 55 du couvercle 5 descend à l'intérieur de la cuve 2 lorsque le couvercle 5 est agencé sur le panier de cuisson 3 en place dans la cuve pour la cuisson, tel que visible sur la figure 2. Le panier de cuisson 3 est alors en position abaissée dans la cuve 2. Le bord périphérique inférieur 55 prolonge la paroi inférieure 54.

Le couvercle 5 agencé sur le panier de cuisson 3 ménage un passage 56 avec le panier de cuisson 3. La section du passage 56 dépend de la distance h et de la distance r. Le couvercle 5 agencé sur le panier de cuisson 3 ménage un passage extérieur 57 avec la cuve 2 lorsque le panier de cuisson 3 occupe la position abaissée dans la cuve 2.

Le dispositif de monte et baisse 6 comporte un organe d'entraînement 60 mobile par rapport au boîtier 1. L'organe d'entraînement 60 est monté dans une glissière 61 solidaire du boîtier 1. L'organe d'entraînement 60 comporte une crémaillère 62 entraînée par un moteur 63. L'organe d'accrochage 39 du panier de cuisson 3 est monté de manière amovible sur l'organe d'entraînement 60. L'organe d'entraînement 60 active un détecteur de fin de course inférieur 64 lors de la descente du panier de cuisson 3, et un détecteur de fin de course supérieur 65 lors de la remontée du panier de cuisson 3. Le détecteur de fin de course inférieur 64 et le détecteur de fin de course supérieur 65, visibles sur la figure 6, sont par exemple formés par des interrupteurs.

Le cuiseur comporte un dispositif de maintien 66 prévu pour bloquer le panier de cuisson 3 en position abaissée dans la cuve 2 lors de la cuisson, afin d'éviter que la vapeur s'échappe de la chambre d'ébullition en dehors des ouvertures 34. Plus particulièrement, le dispositif de maintien 66 est formé par le dispositif de monte et baisse 6 du panier de cuisson 3. Le moteur 63 bloque la crémaillère 62 portée par l'organe d'entraînement 60. Les efforts exercés par la vapeur générée dans la chambre d'ébullition 9 exercent un couple incompatible avec l'extraction de l'organe d'accrochage 39 de l'organe d'entraînement 60. Le panier de cuisson 3 est maintenu en position abaissée sur le fond 22 de la cuve 2. Toutefois le dispositif de maintien 66 peut présenter une certaine élasticité de manière à laisser échapper de la vapeur entre le panier de cuisson 3 et la cuve 2 lorsque l'effort exercé par la vapeur est trop important.

Un dispositif de détection de vapeur 7 est prévu pour commander la descente du panier de cuisson 3 dans la cuve 2. A cet effet, la paroi latérale 23 de la cuve 2 présente une ouverture de détection de vapeur 24 agencée au niveau du panier de cuisson 3 occupant une position relevée, tel que visible sur la figure 6. La section de l'ouverture de détection de vapeur 24 correspond de préférence à un diamètre compris entre 10 et 20 mm. La paroi latérale 23 comporte une conformation interne 25 surplombant l'ouverture de détection de vapeur 24. La conformation interne 25 s'étend de préférence de part et d'autre de l'ouverture de détection de vapeur 24, et obture partiellement l'espace compris entre le panier de cuisson 3 en position relevée et la cuve 2. L'ouverture de détection de vapeur 24 communique avec une chambre 13. Le dispositif de détection de vapeur 7 est susceptible d'être activé par la vapeur circulant dans la chambre 13 pour commander la descente du panier de cuisson 3 dans la cuve 2. La chambre 13 est agencée dans le boîtier 1. La chambre 13 débouche dans une paroi latérale 14 du boîtier 1 en regard de l'ouverture de détection de vapeur 24. La chambre 13 débouche à l'extérieur du cuiseur, dans une paroi supérieure 15 du boîtier 1. La paroi latérale 14 et la paroi supérieure 15 appartiennent à la coque supérieure intérieure 12 du boîtier 1.

Tel que visible aux figures 6 et 8, la chambre 13 est formée par un conduit 70. Le dispositif de détection de vapeur 7 comporte un capteur de température 77, visible sur la figure 8. Le capteur de température 77 est par exemple une résistance de type CTN. Le capteur de température 77 est agencé à l'extérieur du conduit 70. Le capteur de température 77 est monté contre une paroi 71 du conduit 70. La paroi 71 du conduit 70 est avantageusement amincie au niveau du capteur de température 77. Le conduit 70 présente une extrémité latérale 72 prévue pour être placée en regard de l'ouverture de détection de vapeur 24 de la cuve 2 placée dans le boîtier 1. Le conduit 70 présente une extrémité supérieure 73 débouchant dans une ouverture de la paroi supérieure 15. Le conduit 70 est ascendant. Plus particulièrement, le conduit 70 est oblique et coudé vers le haut, pour faciliter l'échappement de la vapeur.

Le capteur de température 77 est associé à un dispositif de commande prévu pour alimenter le moteur 63 lorsque la température seuil est détectée afin de descendre le panier de cuisson 3 en position abaissée. Le dispositif de commande comporte également un minuteur réglable par l'utilisateur. Le dispositif de commande est prévu pour alimenter le moteur 63 lorsque le temps programmé est écoulé, afin de remonter le panier de cuisson 3 en position relevée.

Le fonctionnement du cuiseur est le suivant.

Le positionnement correct de la cuve 2 dans le boîtier 1 est obtenu par la mise en place des poignées 20 dans les échancrures 16, possible seulement dans la position permettant l'alimentation des moyens de chauffe 8 par le connecteur 29. L'utilisateur remplit la cuve 2 de la quantité de bain de cuisson souhaitée, par exemple de l'eau avec des aromates, et place les aliments à cuire dans le panier de cuisson 3 en position relevée. Pour la cuisson de pâtes, une proportion de 3 litres d'eau pour 500 g de pâtes sèches peut suffire, alors que la quantité d'eau usuelle est de 5 litres d'eau pour 500 g de pâtes sèches. L'utilisateur met en marche le cuiseur après avoir sélectionné une durée de cuisson. Les moyens de chauffe 8 portent le bain de cuisson 40 à ébullition. De la vapeur monte entre la cuve 2 et le panier de cuisson 3. Le dispositif de détection de vapeur 7 détecte la vapeur circulant dans la chambre 13 pour commander la descente du panier de cuisson 3 dans la cuve 2. Si désiré, le dispositif de chauffe peut continuer à alimenter les moyens de chauffe à pleine puissance puis alimenter les moyens de chauffe 8 à puissance réduite. La vapeur produite dans la chambre d'ébullition 9, notamment lors de la chauffe à pleine puissance, permet d'agiter les aliments pendant la cuisson. Le collage des aliments sur la paroi latérale ajourée 31 du panier de cuisson 3 et le collage des alinients entre eux peut ainsi être évité. Le chauffage à pleine puissance après la descente du panier de cuisson 3 dans la cuve 2 permet de ramollir plus rapidement le pied de spaghetti non coupés introduits par l'ouverture supérieure 51 du couvercle 5. La descente des spaghetti dans le panier de cuisson 3 est ainsi facilitée. Le couvercle 5 permet d'éviter les projections du bain de cuisson et de limiter la formation de mousse, grâce au bord périphérique inférieur 55 et au passage 56. Les aliments sont cuits pendant la durée indiquée. Lorsque la durée de cuisson est écoulée, le panier de cuisson 3 est remonté. Le cuiseur permet une cuisson automatique. La cuisson peut être effectuée sans surveillance. Une phase de maintien au chaud peut être prévue, par exemple en alternant des périodes dans lesquelles le panier de cuisson 3 est en position relevée et des périodes dans lesquelles le panier de cuisson 3 est en position abaissée dans la cuve 2. Si désiré, les moyens de chauffe 8 peuvent être alimentés par intermittence, notamment après la descente du panier de cuisson 3 dans la cuve 2 et/ou pendant la phase de maintien au chaud.

Plus particulièrement selon l'invention, le dispositif de monte et baisse 6 maintient le panier de cuisson 3 en position abaissée contre le fond 20 de la cuve 2. Les bulles de vapeur formées dans la chambre d'ébullition 9 sont formées préférentiellement sous la zone périphérique 35. L'inclinaison de la zone intermédiaire 36 vers le haut en direction de la périphérie du panier de cuisson 3 favorise l'échappement de la vapeur par les ouvertures 34 de la zone périphérique 35 du fond ajouré 30. La vapeur remontant le long de la paroi latérale perforée 31 du panier de cuisson 3 permet d'éviter le collage des aliments sur ladite paroi. Une partie de la vapeur s'échappe toutefois par les ouvertures 34 de la zone centrale 37 et contribue au remuage des aliments dans le panier de cuisson 3. L'agitation des aliments est particulièrement importante pendant les périodes de chauffe à pleine puissance, du fait de l'ébullition importante dans la chambre d'ébullition 9. L'agitation d'aliments tels que des pâtes ou des nouilles permet d'éviter le collage des aliments entre eux et sur les parois. La cuisson de tels aliments est ainsi améliorée. Le volume de bain de cuisson nécessaire pour la cuisson peut être réduit. La compacité de l'appareil peut être augmentée. Un tel panier de cuisson 3 est particulièrement simple à construire, à utiliser et à nettoyer.

A titre de variante, le panier de cuisson 3 agencé dans la cuve 2 peut s'étendre partiellement hors de la cuve 2, même dans la position abaissée.

A titre de variante, le dispositif de maintien 66 du panier de cuisson 3 n'est pas nécessairement formé par un dispositif de monte et baisse du panier de cuisson. Le dispositif de maintien peut comporter des éléments de retenue disposés dans la cuve et/ou à l'extérieur de la cuve. Par exemple la cuve et le panier de cuisson peuvent présenter un système de verrouillage à baïonnette, ou encore un couvercle accroché sur la cuve peut maintenir le panier de cuisson dans la cuve.

A titre de variante, la paroi périphérique 33 du panier de cuisson 3 peut reposer directement sur la cuve 2.

A titre de variante, le panier de cuisson 3 ne repose pas nécessairement sur le fond de la cuve 2, mais peut notamment reposer contre la paroi latérale de la cuve 2 ou contre un épaulement de la cuve 2.

A titre de variante, la paroi périphérique 33 du panier de cuisson 3 n'est pas nécessairement inférieure, mais peut notamment être latérale.

A titre de variante, la cuve 2 peut être montée fixe dans le boîtier 1.

A titre de variante, le cuiseur peut être dépourvu de boîtier logeant la cuve 2.

A titre de variante, le cuiseur ne comporte pas nécessairement des moyens de chauffe. Le bain de cuisson peut alors être porté à ébullition par des moyens de chauffe n'appartenant pas au cuiseur.

La présente invention n'est nullement limitée à l'exemple de réalisation décrit et à ses variantes, mais englobe de nombreuses modifications dans le cadre des revendications.

## Revendications

1. Cuiseur, notamment cuiseur à pâtes, comportant une cuve (2) prévue pour recevoir un bain de cuisson susceptible d'être porté à ébullition, un panier de cuisson (3) agencé dans la cuve (2), le panier de cuisson (3) présentant un fond ajouré (30), le panier de cuisson (3) délimitant avec la cuve (2) une chambre d'ébullition (9) sous le fond ajouré (30), le fond ajouré (30) présentant une zone périphérique (35) pourvue d'ouvertures (34), **caractérisé en ce que** la zone périphérique (35) entoure une zone intermédiaire (36) moins dense en ouvertures.

2. Cuiseur selon la revendication 1, **caractérisé en ce qu'**il comporte un dispositif de maintien (66) prévu pour bloquer le panier de cuisson (3) dans la cuve (2) lors de la cuisson.

3. Cuiseur selon la revendication 2, **caractérisé en ce que** le dispositif de maintien (66) est formé par un dispositif de monte et baisse (6) du panier de cuisson (3).

4. Cuiseur selon l'une des revendications 1 à 3, **caractérisé en ce que** le panier de cuisson (3) comporte une paroi périphérique (33) entourant le fond ajouré (30).

5. Cuiseur selon la revendication 4, **caractérisé en ce que** la paroi périphérique (33) porte un joint (42) prévu pour prendre appui contre la cuve (2).

6. Cuiseur selon l'une des revendications 1 à 5, **caractérisé en ce que** la zone intermédiaire (36) est dépourvue d'ouvertures.

7. Cuiseur selon l'une des revendications 1 à 6, **caractérisé en ce que** la zone intermédiaire (36) est relevée en direction de la zone périphérique (35).

8. Cuiseur selon l'une des revendications 1 à 7, **caractérisé en ce que** le fond ajouré (30) présente une zone centrale (37) pourvue d'ouvertures (34).

9. Cuiseur selon l'une des revendications 1 à 8, **caractérisé en ce que** le fond ajouré (30) est bombé vers le bas.

10. Cuiseur selon l'une des revendications 1 à 9, **caractérisé en ce que** le panier de cuisson (3) comporte une paroi latérale perforée (31).

11. Cuiseur selon l'une des revendications 1 à 10, **caractérisé en ce que** la cuve (2) est montée dans un boîtier (1).

12. Cuiseur selon la revendication 11, **caractérisé en ce que** la cuve (2) est montée amovible dans le boîtier (1).

13. Cuiseur selon l'une des revendications 1 à 12, **caractérisé en ce que** la cuve (2) est associée à des moyens de chauffe (8).
